# EUROPEAN PATENT APPLICATION

(11) **EP 4 166 009 A1**
(43) Date of publication of application: **19.04.2023**
(21) Application number: 22175472.4
(22) Date of filing: 25.05.2022
(51) Int. Cl.: A23L 21/00, A23L 29/20, A23L 29/231, A23L 33/20

(54) **GELLING COMPOSITION AND HIGH-METHOXYL PECTIN GEL, PREPARATION METHOD, FOOD COMPOSITION, FEED COMPOSITION AND USE THEREOF**

(30) Priority: 27.05.2021 CN 202110585765
(71) Applicant: Cargill, Incorporated, Wayzata, Minnesota 55391 (US)
(72) Inventor: Song, Guangwei, Beijing, 102206 (CN); Lv, Vicky, Beijing (CN); Ma, Jiahui, Beijing (CN); Zhao, Yolanda, Beijing (CN)
(74) Representative: Elseviers, Myriam

(57) **Abstract**

The present disclosure relates to a gelling composition and high-methoxyl pectin gel, preparation method, food composition and feed composition and use thereof. The gelling composition of the present disclosure includes a high-methoxyl pectin, a calcium ion and a carboxylate moiety of a carboxylic complexing agent. The high-methoxyl pectin gel of the present disclosure includes the gelling composition. The method for preparing a high-methoxyl pectin gel of the present disclosure includes: providing a high-methoxyl pectin, a calcium ion source and a carboxylic complex agent, and reacting the high-methoxyl pectin with the calcium ion source and the carboxylic complexing agent to obtain the high-methoxyl pectin gel. With high-methoxyl pectin as a raw material, the present disclosure produces a high-methoxyl pectin gel, in particular a sugar-free or low-sugar high-methoxyl pectin gel. The high-methoxyl pectin gel of the present disclosure can be applied to product systems such as high dietary fiber, rich calcium, jelly, jam, candy and confectionery, particularly suitable for a low-sugar/sugar-free food, such as low-sugar/sugar-free jelly.

## Description

### Technical Field

The present disclosure relates to a gelling composition and high-methoxyl pectin gel, preparation method, food composition and feed composition and use thereof, and in particular to a sugar-free (or sucrose-free) or low-sugar (or low-sucrose) calcium-rich pectin gel.

### Background

Pectin is a plant-derived, water-soluble hydrocolloid, and is typically obtained from citrus fruits, apple pomace and sugar beets. Pectin is considered by many consumers a label-friendly food ingredient.

Pectin could be classified into high-methoxyl (HM) pectin and low-methoxyl (LM) pectin. Generally, pectin with degree of methoxylation of greater than or equal to 50%, such as 50% to 80% is classified as high-methoxyl pectin; and pectin with degree of methoxylation of less than 50% is classified as low-methoxyl pectin. In terms of gel formation, high-methoxyl pectin and low-methoxyl pectin are completely different in mechanism and technical solutions.

In a conventional technology, gelling of high-methoxyl pectin generally requires the presence of a high content of sugar such as sucrose (typically above 55%) and acid (pH value of less than 3.8) in order for gelling to take place. In the presence of a high content of sugar, gelling mechanism for high-methoxyl pectin involves a series of intermolecular interactions, where the primary interaction is hydrogen bonding, followed by the hydrophobic interactions between methoxyl groups. Under suitable conditions, e.g. the presence of sugar and acid, gelling typically takes place by lowering the temperature of the medium.

The gelling mechanism for low-methoxyl pectin is completely different from that of high-methoxyl pectin, where the gelling of low-methoxyl pectin is resulted from a collective action of ionic connections through a calcium bridge between carboxyl groups of two pectin molecular chains and hydrogen bonding. This type of gelling is affected by the concentration of calcium ions in the system. Typical gelling conditions of low-methoxyl pectin include: a pH value in a range of 3.2 to 4.5, and soluble solid content in a range of 10% to 80%.

High-methoxyl pectin, on the contrary, cannot form sufficient calcium bridges to produce a gel because the presence of sugar and the number of excessive methoxy groups on the high-methoxyl pectin molecules would hinder the formation of the three-dimensional structure of gel. These circumstances create a challenge when attempting to provide a sugar-free or low-calorie high-methoxyl pectin gel.

Chinese patent application No. CN201410268965.9 (publication No. CN104041648A) is directed to a sugar-free pectin soft sweet and preparing method thereof. This patent document discloses a sugar-free pectin soft sweet prepared from the following materials: 50-75 parts of crystallized maltitol, 10-23 parts of xylitol, 0.5-2 parts of trehalose, 2-5 parts of pectin, 0.2-1.0 part of lactic acid, 0.2-0.5 part of citric acid, 0.2-0.8 part of vitamin C, 0.10-0.60 part of sodium citrate, 0.05-0.23 part of edible essence and 0-0.01 part of pigment. The invention also provides a method for preparing the sugar-free pectin soft sweet. Although maltitol and xylitol taste sweet, sugar alcohols are not "calorie-free" as other high-efficiency sweeteners. Due to their not high-level sweetness, they are used in a relatively large amount in food, thus generating a non-negligible amount of calories. In addition, taking a large amount of sugar alcohols may lead to diarrhea.

Chinese patent application No. CN2020104639039 (publication No. CN111513305A) relates to a rapid sugar-free gelling method for high-methoxyl pectin and product thereof, and discloses a rapid sugar-free gelling method for high-methoxyl pectin and product. The method comprises the following steps: adding high-methoxyl pectin into water until the high-methoxyl pectin is completely dissolved to obtain a high-methoxyl pectin solution; then adding sodium chloride into the high-methoxyl pectin solution, mixing uniformly, and adjusting the pH value to 2.8-3.1 with hydrochloric acid; adding absolute ethyl alcohol while stirring, and mixing uniformly to obtain high methoxyl pectin gel. By rationally regulating and controlling the ratio of the high-methoxyl pectin, the water, the sodium chloride and the absolute ethyl alcohol, the high methoxyl pectin gel can be successfully prepared through the induction of the absolute ethyl alcohol under the sugar-free condition. However, considering this solution necessarily requires the participation of sodium chloride and absolute ethanol, the application and use would be largely limited in the food industry due to the presence of ethanol which has addiction and carcinogenic action.

In view of the various problems above, the present disclosure proposes a high-methoxyl pectin gel formed without a high content of sugar and alcohol, such as a sugar-free, calcium-rich high-methoxyl pectin gel, and a preparation method thereof, making it possible to apply the pectin in a sugar-free, low-calorie food or feedstuff, such as a sugar-free, low-calorie pectin jelly, jam, candy and confectionery.

### Summary

The present disclosure provides a gelling composition comprising a high-methoxyl (HM) pectin, a calcium ion and a carboxylate moiety of a carboxylic complexing agent.

Preferably, the gelling composition of the present invention, comprises sucrose in an amount of at most about 30wt%, more preferably at most 20 wt%, more preferably at most 10 wt%, most preferably at most 1 wt%, relative to the total weight of the composition. Sucrose, typically known as table sugar, is a disaccharide, i.e. a molecule composed of two monosaccharides: glucose and fructose. Sucrose is produced naturally in plants, from which table sugar is refined. It has the molecular formula C₁₂H₂₂O₁₁.

Preferably, the amount of sucrose contained in the gelling composition is at most about 0.5wt%. Most preferably, the gelling composition is sugar-free, i.e. it has a sucrose amount of at most 100 ppm, more preferably at most 50 ppm, most preferably at most 10 ppm.

Preferably, the gelling composition is alcohol-free, i.e. it contains alcohol in an amount of at most 1000 ppm, most preferably at most 100 ppm. Preferably, the alcohol is present in an amount of between 1 ppm and 100 ppm and is selected from the group consisting of methanol, ethanol, propanol, isopropanol, n-butanol, 2-butanol and tert-butanol, or a combination thereof.

Preferably, the high-methoxyl pectin has a degree of methoxylation of from 50 to 80%.

Preferably, the gelling composition contains calcium ions in an amount of from 10 to 2,000 ppm.

Preferably, the gelling composition contains high-methoxyl pectin in an amount of between 0.5 and 5 wt%, preferably from 1 to 3 wt%.

Preferably, the carboxylate moiety of the carboxylic complexing agent is present in an amount of between 0.01 and 1 wt%, more preferably from 0.02 to 0.5 wt% of the weight of the gelling composition.

Preferably, the high-methoxyl pectin has an average molar mass of about 100,000 to 400,000 g/mole.

The invention also relates to a gelling composition comprising calcium ions in an amount of between 100 and 2000 ppm, high-methoxyl pectin in an amount of between 0.5 wt% and 5 wt% and a carboxylate moiety of a carboxylic complexing agent in an amount of between 100 and 10 000 ppm. Preferably, the amount of said calcium ions is between 100 and 1000 ppm, more preferably between 100 and 450 ppm. Preferably, said carboxylate moiety is in an amount of between 500 and 7000 ppm, more preferably between 1000 and 5000 ppm, more preferably between 1500 and 4000 ppm. Preferably, said calcium ions are in an amount of between 100 and 1000 ppm and said carboxylate moiety is in an amount of between 500 and 7000 ppm, more preferably between 1000 and 5000 ppm. More preferably, said calcium ions are in an amount of between 100 and 450 ppm and said moiety is in an amount of between 1500 and 4000 ppm.

Preferably, the carboxylate moiety of the carboxylic complexing agent is selected from the group consisting of: citrate, tartrate, gluconate, ethylenediaminetetraacetate and diethylenetriaminepentaacetate, or a combination thereof.

Preferably, the carboxylic complexing agent is selected from the group consisting of citrate acid, citrate salt, tartrate acid, tartrate salt, gluconate acid, gluconate salt, ethylenediaminetetraacetate acid, ethylenediaminetetraacetate salt, diethylenetriaminepentaacetate acid and diethylenetriaminepentaacetate salt, or a combination thereof.

Preferably, the carboxylic complexing agent is selected from the group consisting of: citrate acid, tartrate acid, gluconate acid, ethylenediaminetetraacetate acid, diethylenetriaminepentaacetate acid, sodium citrate, potassium citrate, sodium tartrate, potassium tartrate, sodium gluconate, potassium gluconate, disodium ethylenediaminetetraacetate, dipotassium ethylenediaminetetraacetate, pentasodium diethylenetriaminepentaacetate and pentapotassium diethylenetriaminepentaacetate, or a combination thereof.

The present disclosure further provides a high-methoxyl (HM) pectin gel, wherein the high-methoxyl pectin gel comprises a three-dimensional network structure of a high-methoxyl pectin, and the high-methoxyl pectin gel comprises the gelling composition described herein.

The present disclosure further provides a method for preparing a high-methoxyl pectin gel, comprising:
(i) providing a high-methoxyl pectin, a calcium ion source and a carboxylic complex agent, and
(ii) reacting the high-methoxyl pectin with the calcium ion source and the carboxylic complexing agent to obtain the high-methoxyl pectin gel.

Preferably, the step (ii) of reacting the high-methoxyl pectin with the calcium ion source and the carboxylic complexing agent comprises:
a) mixing the high-methoxyl pectin with the carboxylic complexing agent and a deionized water to obtain a pectin solution;
b) preparing a solution of the calcium ion source or a dispersion of the calcium ion source; and
c) mixing the pectin solution with the solution of the calcium ion source or the dispersion of the calcium ion source to obtain a mixture.

Preferably, the step (ii) of reacting the high-methoxyl pectin with the calcium ion source and the carboxylic complexing agent further comprises:
d) stirring the mixture and stand for a gelling time, to obtain the high-methoxyl pectin gel.

Preferably, the step (ii)(a) of mixing the high-methoxyl pectin with the carboxylic complexing agent and the deionized water is carried out at 10-90 °C, preferably for 15-180mins.

Preferably, the calcium ion source is a calcium salt. Preferably, the calcium salt is selected from the group consisting of calcium chloride, calcium lactate, tricalcium phosphate, dicalcium phosphate and calcium dihydrogen phosphate, or a combination thereof.

Preferably, the step (ii)(b) of preparing a solution of a calcium ion source or a dispersion of a calcium ion source is carried out at 10-90 °C.

Preferably, the step (ii)(c) of mixing the pectin solution with the solution of the calcium ion source or the dispersion of the calcium ion source is carried out at 10-90 °C, preferably at 10-65°C.

Preferably, the gelling time is between 1 and 48 hours, more preferably from 4 to 24 hours.

Preferred examples of the carboxylic complexing agent are given above and will not be repeated herein.

Preferably, the high-methoxyl pectin has a weight of about 0.5-5wt%, preferably about 1-3wt% of a total weight of a reaction system in which the high-methoxyl pectin reacts with the calcium ion source and the carboxylic complexing agent.

Preferably, in the reaction system in which the high-methoxyl pectin reacts with the calcium ion source and the carboxylic complexing agent, the carboxylic complexing agent has a concentration of about 100-10,000ppm, for example, about 200-5000ppm.

Preferably, the gelling composition and/or the method of the invention are free of or do not utilize sodium chloride. By free of is herein understood that the amount of sodium chloride is at most 1.0 ppm, more preferably at most 0.5 ppm, most preferably 0.0 ppm.

The present disclosure further provides a high-methoxyl (HM) pectin gel obtained by the method described herein.

The present disclosure further provides a food composition, comprising the gelling composition described herein or the high-methoxyl pectin gel described herein.

The present disclosure further provides a feed composition comprising the gelling composition described herein or the high-methoxyl pectin gel described herein.

### Detailed Description of the Disclosure

In order to make the objectives, technical solutions, and advantages of the embodiments of the present disclosure clearer, the technical solutions in the embodiments of the present disclosure will be described in a clear and complete manner below. Without specific conditions specified in the embodiment, the embodiment shall be carried out under the conventional condition or the condition recommended by the manufacturer. The reagents or instruments used without manufacturers indicated are all conventional products that are commercially available in the market.

Unless defined otherwise, all percentages of the composition as indicated herein are based on the weight of the total composition. As used herein, the wording "comprise (comprising)" or "include (including)" and their variants are not intended to be limiting. Therefore, recitation of each item in a list does not exclude other items useful in the materials, compositions, devices and methods of the technology. Similarly, the wording "can" and "may" and their variants are not intended to be limiting. Therefore, recitation of an embodiment that can or may include some elements or features does not exclude other embodiments of the present disclosure that do not contain those elements or features.

The present disclosure relates to a gelling composition and high-methoxyl pectin gel, preparation method, food composition and feed composition and use thereof, and in particular to a sugar-free (or sucrose-free) or low-sugar (or low-sucrose) calcium-rich pectin gel.

The inventors have surprisingly found that a composition comprising a high-methoxyl pectin, a calcium ion and a carboxylate moiety of a carboxylic complexing agent could form a high-methoxyl pectin gel independent of sugar and alcohol, such as forming a sugar-free (or sucrose-free) or low-sugar (or low-sucrose) high-methoxyl pectin gel, and alcohol-free or low-alcohol high-methoxyl pectin gel.

As used herein, the term "high methoxyl pectin" generally refers to a pectin with degree of esterification (in particular degree of methoxylation) greater than or equal to 50%, for example, 50-80%. In the pectin industry, degree of methoxylation generally refers to degree of substitution by methoxylation.

As used herein, the term "carboxylic complexing agent" refers to a complexing agent having one or more carboxylate acids or carboxylate moieties. Preferably, carboxylic complexing agent of each molecule has, for example, 1, 2, 3, 4, 5, 6, 7, 8, 9, or 10 carboxylate acids or carboxylate moieties. Preferably, the term "carboxylic complexing agent" may be a carboxylate acid or a carboxylate salt.

Preferably, degree of methoxylation of the high-methoxyl pectin described herein is greater than or equal to about 55%, greater than or equal to about 56%, greater than or equal to about 57%, greater than or equal to about 58%, greater than or equal to about 59%, greater than or equal to about 60%, greater than or equal to about 61%, greater than or equal to about 62%, greater than or equal to about 63%, greater than or equal to about 64%, greater than or equal to about 65%, greater than or equal to about 66%, greater than or equal to about 67%, greater than or equal to about 68%, greater than or equal to about 69%, greater than or equal to about 70%, greater than or equal to about 71%, greater than or equal to about 72%, greater than or equal to about 73%, greater than or equal to about 74%, greater than or equal to about 75%, greater than or equal to about 76%, greater than or equal to about 77%, greater than or equal to about 78%, or greater than or equal to about 79%.

Preferably, degree of methoxylation of the high-methoxyl pectin described herein is about 55%, about 56%, about 57%, about 58%, about 59%, about 60%, about 61%, about 62%, about 63%, about 64%, about 65%, about 66%, about 67%, about 68%, about 69%, about 70%, about 71%, about 72%, about 73%, about 74%, about 75%, about 76%, about 77%, about 78%, or about 79%.

Unless defined otherwise, all numbers expressing amounts, sizes, temperatures, etc. as used herein should be understood as being modified by the wording "about" in all cases. As used herein, the wording "about" has a general meaning. The wording "about" is used to indicate that a value comprises an inherent error variation of the device or method for determining the value or a value close to the value, for example within 10% or 5% of the listed value (or range of the value).

In the present application, unless defined otherwise, the singular form includes a plural form, and unless defined otherwise, the wording "and" and "or" refers to "and/or". In addition, as used herein, the wording "comprise (comprising)" should be regarded as non-exclusive.

Preferably, the high-methoxyl pectin described herein is a high-methoxyl pectin produced from materials selected from the group consisting of: citrus (such as lemon, lime, orange, and grapefruit) peel, apple pomace, and sugar beets, or a combination thereof.

As used herein, the term "sugar-free" refers to a product such as a gel, a composition and a food that is substantially free of dietary sugar, such as glucose, sucrose, and fructose. For example, the term "sugar-free" refers to a sugar content of at most about 0.5wt% or at most about 0.5g/100ml. Sugar in the term "sugar-free" includes but is not limited to glucose, sucrose, fructose, as well as sugar alcohols, such as maltitol and xylitol.

Preferably, the gelling composition described herein or the high-methoxyl pectin gel described herein is substantially free of sugar, particularly substantially free of sucrose.

Preferably, the gelling composition described herein or the high-methoxyl pectin gel described herein is substantially free of glucose, sucrose, fructose, and sugar alcohols (such as maltitol and xylitol).

Unless defined otherwise, the expression "substantially free of" refers to a product such as a gel, a composition and a food that comprises less than a functional amount of an optional ingredient, typically less than 1wt%, including less than 0.5wt%, or including less than 0.1wt%, and that also comprises 0wt% of these optional or selected ingredients.

Preferably, content of sugar (or sucrose) contained in the gelling composition described herein or contained in the high-methoxyl pectin gel described herein is at most about 0.5wt% or at most about 0.5 g/100ml.

Preferably, the total content of glucose, sucrose, fructose and sugar alcohol (such as maltitol and xylitol) contained in the gelling composition described herein or contained in the high-methoxyl pectin gel described herein is at most bout 0.5wt% or at most about 0.5g/100ml, wherein content of one or more of glucose, sucrose, fructose and sugar alcohol may be 0%.

The term "low sugar" used herein refers to a product, such as a gel, a composition and a food and feedstuff that contains dietary sugar in an amount of at most about 30wt%, preferably at most about 20wt%, preferably at most about 10wt%, or preferably at most about 5wt%. Sugar in the term "low sugar" includes but not limited to glucose, sucrose, fructose, as well as sugar alcohols, such as maltitol and xylitol.

The wording "preferred" and "preferably" used herein refers to embodiments of the technology that give rise to certain benefits under some circumstances. However, other embodiments may also be preferred under the same or other circumstances. Moreover, recitation of one or more preferred embodiments does not imply that other embodiments are not available, nor is it intended to exclude other embodiments from the scope of the technology.

Preferably, content of sugar contained in the gelling composition described herein or contained in the high-methoxyl pectin gel described herein is at most about 30wt%, such as at most about 29wt%, at most about 28wt%, at most about 27wt%, at most about 26wt%, at most about 25wt%, at most about 24wt%, at most about 23wt%, at most about 22wt%, at most about 21wt%, at most about 20wt%, at most about 19wt%, at most about 18wt%, at most about 17wt%, at most about 16wt%, at most about 15wt%, at most about 14wt%, at most about 13wt%, at most about 12wt%, at most about 11wt%, at most about 10wt%, at most about 9wt%, at most about 8wt%, at most about 7wt%, at most about 6wt%, at most about 5wt%, at most about 4wt%, at most about 3wt%, at most about 2wt%, at most about 1wt%, or at most about 0.5wt%. Preferably, content of sugar contained in the gelling composition described herein or contained in the high-methoxyl pectin gel described herein may be a total content of glucose, sucrose, fructose and sugar alcohols (such as maltitol and xylitol), where the one or more of glucose, sucrose, fructose and sugar alcohol are present or absent.

As used herein, the term "alcohol-free" refers to a product, such as a gel, a composition, and a food and feedstuff that is substantially free of alcohol, such as methanol, ethanol, propanol, isopropanol, n-butanol, 2-butanol and tert-butanol. For example, the term "alcohol-free" refers to that content of alcohol, such as ethanol, is at most 0.1wt% (i.e., at most 1000ppm). The term "alcohol-free" includes but is not limited to methanol, ethanol, propanol, isopropanol, n-butanol, 2-butanol, and tert-butanol, or a combination thereof, in particular ethanol.

Preferably, the gelling composition or high-methoxyl pectin gel described herein is substantially free of alcohol. Preferably, the gelling composition or high-methoxyl pectin gel described herein is substantially free of methanol, ethanol, propanol, isopropanol, n-butanol, 2-butanol and tert-butanol.

The term "low alcohol" used herein refers to a product, such as a gel, a composition, and a food and feedstuff that comprises alcohol in an amount of at most about 10wt% (i.e., 100,000ppm), preferably at most about 5wt% (i.e., 50,000ppm), preferably at most about 1wt% (i.e., 10,000ppm) or at most about 0.5wt% (i.e., 5000ppm). The term "low alcohol" includes but not limited to methanol, ethanol, propanol, isopropanol, n-butanol, 2-butanol, and tert-butanol, or a combination thereof, in particular ethanol.

Preferably, content of alcohol, such as ethanol, in the gelling composition described herein or in the high-methoxyl pectin gel described herein is at most about 10wt%, such as at most about 9wt%, at most about 8wt%, at most about 7wt%, at most about 6wt%, at most about 5wt%, at most about 4wt%, at most about 3wt%, at most about 2wt%, at most about 1wt%, at most about 0.5wt%, at most about 0.2wt%, or at most about 0.1wt%. Preferably, content of alcohol in the gelling composition described herein or the high-methoxyl pectin gel described herein can be a total content of methanol, ethanol, propanol, isopropanol, n-butanol, 2-butanol and tert-butanol, where the one or more of methanol, ethanol, propanol, isopropanol, n-butanol, 2-butanol, and tert-butanol are present or absent.

Preferably, the gelling composition comprises a high-methoxyl pectin, a calcium ion, and a carboxylate moiety of a carboxylic complexing agent. Preferably, the gelling composition further comprises water. Preferably, the gelling composition is composed of a high-methoxyl pectin, a calcium ion, a carboxylate moiety of a carboxylic complexing agent, and water. Preferably, the water is a deionized water.

The present disclosure uses high-methoxyl pectin as a reacting material, which enables ionic connection via the calcium bridge between the carboxyl groups of pectin molecular chains, and also enables ionic connection via the calcium bridge between the carboxyl group of pectin molecular chains and the carboxyl group of the carboxylic complexing agent, thereby forming a high-methoxyl pectin gel with a three-dimensional network structure, which is formed mainly by pectin molecules and supplemented by carboxylic complexing agents. The formation of the gel is independent of conditions such as sugar, alcohol, acid or heat, and is associated with characteristics of fast gelling and no risk of pre-gelling. The gel formed by the present disclosure has a good thermal stability and a good water retention capacity, and the gel tastes refreshing. The gel formed by the present disclosure can be applied to a variety of product systems such as high dietary fiber, rich calcium, jelly, jam, candy and confectionery, and is particularly suitable for low sugar/sugar-free or low-alcohol/alcohol-free food such as a low sugar/sugar-free jelly or a low alcohol/alcohol-free jelly.

Preferably, the calcium ion in the high-methoxyl pectin gel has a concentration of about 10-2,000ppm, such as about 20ppm, about 30ppm, about 40ppm, about 50ppm, about 60ppm, about 70ppm, about 80ppm, about 90ppm, about 100ppm, about 150ppm, about 200ppm, about 250ppm, about 300ppm, about 350ppm, about 400ppm, about 450ppm, about 500ppm, about 600ppm, about 700ppm, about 800ppm, about 900ppm, about 1000ppm, about 1100ppm, about 1200ppm, about 1300ppm, about 1400ppm, about 1500ppm, about 1600ppm, about 1700ppm, about 1800ppm, or about 1900ppm. For example, the calcium ion in the high-methoxyl pectin gel has a concentration of about 100-1000ppm, about 200-800ppm, or about 400-500ppm.

Preferably, content of the soluble fiber contained in the high-methoxyl pectin gel described herein is about 0.2%-4%, for example, about 0.6%-3%. For example, content of the soluble fiber content in the high-methoxyl pectin gel described herein is about 0.3%, about 0.4%, about 0.5%, about 0.6%, about 0.7%, about 0.8%, about 0.9%, about 1.0%, about 1.1%, about 1.2%, about 1.3%, about 1.4%, about 1.5%, about 1.6%, about 1.7%, about 1.8%, about 1.9%, about 2.0%, about 2.1%, about 2.2%, about 2.3%, about 2.4%, about 2.5%, about 2.6%, about 2.7%, about 2.8%, about 2.9%, about 3.0%, about 3.1%, about 3.2%, about 3.3%, about 3.4%, about 3.5%, about 3.6%, about 3.7%, about 3.8 or about 3.9%.

Preferably, the high-methoxyl pectin gel described herein has a fracture strength of about 10-500 g/cm², for example, about 50-300 g/cm². Preferably, the high-methoxyl pectin gel described herein has a fracture strength of, for example, about 20 g/cm², about 30 g/cm², about 40 g/cm², about 50 g/cm², about 60 g/cm², about 70 g/cm², about 80 g/cm², about 90 g/cm², about 100 g/cm², about 110 g/cm², about 120 g/cm², about 130 g/cm², about 140 g/cm², about 150 g/cm², about 160 g/cm², about 170 g/cm², about 180 g/cm², about 190 g/cm², about 200 g/cm², about 210 g/cm², about 220 g/cm², about 230 g/cm², about 240 g/cm², about 250 g/cm², about 260 g/cm², about 270 g/cm², about 280 g/cm², about 290 g/cm², about 300 g/cm², about 310 g/cm², about 320 g/cm², about 330 g/cm², about 340 g/cm², about 350 g/cm², about 360 g/cm², about 370 g/cm², about 380 g/cm², about 390 g/cm², about 400 g/cm², about 410 g/cm², about 420 g/cm², about 430 g/cm², about 440 g/cm², about 450 g/cm², about 460 g/cm², about 470 g/cm², about 480 g/cm², or about 490 g/cm². Generally, an effective gel can be formed in a circumstance where the fracture strength is greater than or equal to 10 g/cm².

Preferably, pH of the high-methoxyl pectin gel described herein is 2.0-6.5, for example, 2.8-5.8. Preferably, pH of the high-methoxyl pectin gel described herein is 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6 or 5.7.

Preferably, in the gelling composition, the high-methoxyl pectin has a concentration of about 0.5-5wt%, preferably about 1-3wt%. For example, the high-methoxyl pectin in the gelling composition has a concentration of about 0.6wt%, about 0.7wt%, about 0.8wt%, about 0.9wt%, about 1.0wt%, about 1.1wt%, about 1.2wt %, about 1.3wt%, about 1.4wt%, about 1.5wt%, about 1.6wt%, about 1.7wt%, about 1.8wt%, about 1.9wt%, about 2.0wt%, about 2.1wt%, about 2.2wt %, about 2.3wt%, about 2.4wt%, about 2.5wt%, about 2.6wt%, about 2.7wt%, about 2.8wt%, about 2.9wt%, about 3.0wt%, about 3.1wt%, about 3.2wt%, about 3.3wt%, about 3.4wt%, about 3.5wt%, about 3.6wt%, about 3.7wt%, about 3.8wt%, about 3.9wt%, about % 4.0wt, about 4.1wt%, about 4.2wt%, about 4.3wt%, about 4.4wt%, about 4.5wt%, about 4.6wt%, about 4.7wt%, about 4.8wt%, or about 4.9wt%.

Preferably, the carboxylate moiety of the carboxylic complexing agent (or, the carboxylic complexing agent having the carboxylate moiety) has a weight of about 0.01-1wt%, for example, about 0.02-0.5wt%, of the weight of the gelling composition. Preferably, the carboxylic complexing agent having the carboxylate moiety has a weight of about 0.05wt%, about 0.10wt%, about 0.15wt%, about 0.20wt%, about 0.25wt%, about 0.30wt%, about 0.35wt%, about 0.40wt%, about 0.45wt%, about 0.50wt%, about 0.55wt%, about 0.60wt%, about 0.65wt%, about 0.70wt%, about 0.75wt%, about 0.80wt%, about 0.85wt%, about 0.90wt%, or about 0.95wt% of the weight of the gelling composition.

The present disclosure further provides a method for preparing a high-methoxyl pectin gel, comprising: providing a high-methoxyl pectin, a calcium ion source and a carboxylic complex agent; and reacting the high-methoxyl pectin with the calcium ion source and the carboxylic complexing agent to obtain the high-methoxyl pectin gel.

Preferably, materials used in the method for preparing a high-methoxyl pectin gel described herein do not comprise sodium chloride. Preferably, materials used in the method for preparing a high-methoxyl pectin gel described herein are substantially free of sodium chloride. Preferably, materials used in the method for preparing high-methoxyl pectin gel described herein comprise sodium chloride in an amount of at most about 1wt%, for example, at most about 0.5wt% or at most about 0.1wt%, or even completely free of sodium chloride in the reacting materials.

Preferably, the reaction system in which the high-methoxyl pectin reacts with a calcium ion source and a carboxylic complexing agent comprises the high-methoxyl pectin, the calcium ion source and the carboxylic complexing agent. Preferably, the reaction system in which the high-methoxyl pectin reacts with the calcium ion source and the carboxylic complexing agent further comprises water. Preferably, the reaction system in which the high-methoxyl pectin reacts with the calcium ion source and the carboxylic complexing agent is composed of the high-methoxyl pectin, the calcium ion source, the carboxylic complexing agent and water. Preferably, the water is a deionized water.

Preferably, the step of mixing the high-methoxyl pectin with the carboxylic complexing agent and the deionized water is carried out at 10-90 °C, such as at 10°C, 15°C, 20°C, 25°C, 30°C, 35°C, 40°C, 45°C, 50°C, 55 °C, 60°C, 65°C, 70°C, 75°C, 80°C or 85°C. Preferably, the step of mixing the high-methoxyl pectin with the carboxylic complexing agent and the deionized water is carried out at room temperature.

Preferably, the step of mixing the high-methoxyl pectin with the carboxylic complexing agent and the deionized water is carried out for 15-180mins, such as for 20mins, 25mins, 30mins, 35mins, 40mins, 45mins, 50mins, 55mins, 60mins, 65mins, 70mins, 75mins, 80mins, 85mins, 90mins, 95mins, 100mins, 105mins, 110mins, 115mins, 120mins, 125mins, 130mins, 135mins, 140mins, 145mins, 150mins, 155mins, 160mins, 165mins, 170mins or 175mins.

Preferably, the step of mixing the high-methoxyl pectin with the carboxylic complexing agent and the deionized water is carried out at 10-90°C, for example at 5°C, 10°C, 15°C, 20°C, 25°C, 30°C, 35°C, 40°C, 45°C, 50°C, 55°C, 60°C, 65°C, 70°C, 75°C, 80°C or 85°C. Preferably, the step of mixing the high-methoxyl pectin with the carboxylic complexing agent and the deionized water is carried out at room temperature.

Preferably, the step of mixing the high-methoxyl pectin with the carboxylic complexing agent and the deionized water is carried out for 15-180mins, for example, 20mins, 25mins, for 30mins, 35mins, 40mins, 45mins, 50mins, 55mins, 60mins, 65mins, 70mins, 75mins, 80mins, 85mins, 90mins, 95mins, 100mins, 105mins, 110mins 115mins, 120mins, 125mins, 130mins, 135mins, 140mins, 145mins, 150mins, 155mins, 160mins, 165mins, 170mins, or 175mins.

Preferably, the step of reacting the high-methoxyl pectin with the calcium ion source and the carboxylic complexing agent is carried out at 10-90°C, for example 10-65°C. Preferably, the step of reacting the high-methoxyl pectin with the calcium ion source and the carboxylic complexing agent is carried out at for example 10°C, 15°C, 20°C, 25°C, and 30°C, 35°C, 40°C, 45°C, 50°C, 55°C, 60°C, 65°C, 70°C, 75°C, 80°C or 85°C. Preferably, the step of reacting the high-methoxyl pectin with the calcium ion source and the carboxylic complexing agent is carried out at room temperature.

Preferably, the step of reacting the high-methoxyl pectin with the calcium ion source and the carboxylic complexing agent is carried out for at most 1 hour, for example at most 2 hours, at most 3 hours, at most 4 hours, at most 5 hours, at most 6 hours, at most 7 hours, at most 8 hours, at most 9 hours, at most 10 hours, at most 11 hours, at most 12 hours, at most 13 hours, at most 14 hours, at most 15 hours, at most 16 hours, at most 17 hours, at most 18 hours, at most 19 hours, at most 20 hours, at most 21 hours, at most 22 hours, at most 23 hours, at most 24 hours, at most 25 hours, at most 26 hours, at most 27 hours, at most 28 hours, at most 29 hours, at most 30 hours, at most 31 hours, at most 32 hours, at most 33 hours, at most 34 hours, at most 35 hours, at most 36 hours, at most 37 hours, at most 38 hours, at most 39 hours, at most 40 hours, at most 41 hours, at most 42 hours, at most 43 hours, at most 44 hours, at most 45 hours, at most 46 hours, at most 47 hours, or at most 48 hours. Preferably, the step of reacting the high-methoxyl pectin with the calcium ion source and the carboxylic complexing agent is carried out for about 1-48 hours, for example about 4-24 hours, preferably about 8-18 hours or about 10-15 hours.

Preferably, the high-methoxyl pectin has a weight of about 0.5-5wt%, preferably about 1-3wt%, of the total weight of the reaction system in which the high-methoxyl pectin reacts with the calcium ion source and the carboxylic complexing agent. For example, the high-methoxyl pectin has a weight of about 0.5-5wt%, preferably about 1-3wt%, of the weight of a mixture obtained by mixing the pectin solution with the solution of the calcium ion source or the dispersion of the calcium ion source as described above. Preferably, the high-methoxyl pectin has a weight of about 0.6%, about 0.7wt%, about 0.8wt%, about 0.9wt%, about 1.0wt%, about 1.1wt%, about 1.2wt%, about 1.3wt%, about 1.4wt%, about 1.5wt%, about 1.6wt%%, about 1.7wt%, about 1.8wt%, about 1.9wt%, about 2.0wt%, about 2.1wt%, about 2.2wt%, about 2.3wt%, about 2.4wt%, about 2.5wt%, about 2.6wt %, about 2.7wt%, about 2.8wt%, about 2.9wt%, about 3.0wt%, about 3.1wt%, about 3.2wt%, about 3.3wt%, about 3.4wt%, about 3.5wt%, about 3.6wt%, about 3.7wt%, about 3.8wt%, about 3.9wt%, about 4.0wt%, about 4.1wt%, about 4.2wt%, about 4.3wt%, about 4.4wt%, about 4.5wt%, about 4.6wt%, about 4.7wt%, about 4.8wt% or about 4.9wt% of the total weight of the reaction system in which the high-methoxyl pectin reacts with the calcium ion source and the carboxylic complexing agent.

Preferably, in the reaction system in which the high-methoxyl pectin reacts with the calcium ion source and the carboxylic complexing agent, the carboxylic complexing agent has a concentration of about 100-10,000ppm, for example about 200-5000ppm. Preferably, in a reaction system in which the high-methoxyl pectin reacts with the calcium ion source and the carboxylic complexing agent, the carboxylic complexing agent has a concentration of about 150ppm, about 200ppm, about 300ppm, about 400ppm, about 500ppm, about 600ppm, about 700ppm, about 800ppm, about 900ppm, about 1000ppm, about 1500ppm, about 2000ppm, about 2500ppm, about 3000ppm, about 3500ppm, about 4000ppm, about 4500ppm, about 5000ppm, about 6500ppm, about 7000ppm, about 7500ppm, about 8000ppm, about 8500ppm, about 9000ppm or about 9500ppm.

Preferably, the carboxylic complexing agent is selected from the group consisting of citrate acid, citrate salt, tartrate acid, tartrate salt, gluconate acid, gluconate salt, ethylenediaminetetraacetate acid, ethylenediaminetetraacetate salt, diethylenetriaminepentaacetate acid and diethylenetriaminepentaacetate salt, or a combination thereof. Preferably, the carboxylic complexing agent is citrate acid and/or citrate salt. Preferably, the citrate salt may be a water-soluble citrate salt. Preferably, the citrate salt is selected from the group consisting of sodium citrate, potassium citrate, ammonium citrate and calcium citrate, or a combination thereof. Preferably, the citrate salt is sodium citrate.

The present disclosure further provides a food composition and/or feed composition, comprising the gelling composition described herein or the high-methoxyl pectin gel described herein. Preferably, the food composition or the feed composition is, for example, jelly, jam, candy or confectionery. Preferably, the food composition or the feed composition is a sugar-free or low-sugar composition, for example, a sucrose-free or low-sucrose composition. Preferably, the food composition or the feed composition is an alcohol-free or low-alcohol composition, for example, an ethanol-free or low-ethanol composition.

Preferably, the food composition comprises the gelling composition described herein or the high-methoxyl pectin gel described herein, and other food-acceptable components, such as food additives.

The present disclosure will be further illustrated by the following examples.

Materials used include:
a high-methoxyl pectin (lemon pectin, orange peel pectin, apple pectin, sugar beet pectin) of food grade, which was produced by Cargill Asia Pacific Food Systems (Beijing) Co.,Ltd, and is white with slightly yellowish powder, and contains a small amount of protein, etc.; and
sodium citrate, potassium citrate, sodium tartrate, potassium tartrate, sodium gluconate, potassium gluconate, disodium ethylenediaminetetraacetate, dipotassium ethylenediaminetetraacetate, pentasodium diethylenetriaminepentaacetate, pentapotassium diethylenetriaminepentaacetate, calcium chloride, calcium lactate, tricalcium phosphate, dicalcium phosphate and calcium dihydrogen phosphate of food grade;
where the sodium citrate, potassium citrate, sodium tartrate, potassium tartrate, sodium gluconate, potassium gluconate, disodium ethylenediaminetetraacetate, dipotassium ethylenediaminetetraacetate, pentasodium diethylenetriaminepentaacetate, and pentapotassium diethylenetriaminepentaacetate were manufactured by Hubei Yihang Biological Technology Co., Ltd.; and
calcium chloride, calcium lactate, tricalcium phosphate, dicalcium phosphate and calcium dihydrogen phosphate, which were manufactured by Weifang Haizhiyuan Chemical Co., Ltd.

Regarding the device used herein, the model and the manufacturer are as follows:
Enamel (Glass-Lined) Reactor: K1000 type, Zibo Taiji Industrial Enamel Co., Ltd.;
Gel Strength Analyzing Instrument: Texture Analyser - TA.XT Plus, purchased from Stable Micro System Company, UK; and

Detection parameters:
1) detecting probe: P/1
2) detecting pressure: 10g
3) speed before measuring: 3mm/sec
4) speed of measuring: 0.3mm/s
5) speed after measuring: 10mm/s
6) distance of measuring: 20mm

### Example 1

5kg of apple pectin with degree of methoxylation of 50% and 0.15kg of sodium citrate were chosen. 93.85kg of deionized water was added and the mixture was heated to 65 degree Celsius. The mixture was stirred until it was dissolved to obtain 99kg of the pectin solution. 0.083kg of calcium chloride was chosen and 0.917kg of deionized water was added. The mixture was stirred at ambient temperature until it was dissolved to obtain 1kg of calcium chloride solution. The calcium chloride solution was slowly poured into the pectin solution, and stirred slowly at ambient temperature for 1 hour. Then let stand and keep stable for gelling for 12 hours at room temperature, to obtain 100kg of weak-strength gel.

### Example 2

0.5kg of apple pectin with degree of methoxylation of 80% and 0.2kg of sodium tartrate were chosen. 98.3kg of deionized water was added and the mixture was heated to 45 degree Celsius. The mixture was stirred until it was dissolved to obtain 99kg of the pectin solution. 0.109kg of calcium lactate was chosen and 0.891kg of deionized water was added. The mixture was stirred at ambient temperature until it was dissolved to obtain 1kg of calcium lactate dispersion. The calcium lactate dispersion was slowly poured into the pectin solution, and stirred slowly at ambient temperature for 1 hour. Then let stand and keep stable for gelling for 20 hours at room temperature to obtain 100kg of weak-strength gel.

### Example 3

1kg of lemon pectin with degree of methoxylation of 55%, and 0.01kg of potassium gluconate were chosen. 97.99kg of deionized water was added, and the mixture was heated to 20 degree Celsius. The mixture was stirred until it was dissolved to obtain 99kg of the pectin solution. 0.517kg of tricalcium phosphate was chosen and 0.483kg of deionized water was added. The mixture was stirred at ambient temperature to obtain 1kg of tricalcium phosphate dispersion. The tricalcium phosphate dispersion was slowly poured into the pectin solution and stirred slowly at ambient temperature for 1 hour. Then let stand and keep stable for gelling for 4 hours at room temperature to obtain 100kg of weak-strength gel.

### Example 4

3kg of lemon pectin with degree of methoxylation of 66% was chosen. 95kg of deionized water and 1 kg of disodium EDTA were added, and the mixture was heated to 75 degree Celsius. The mixture was stirred until it was dissolved to obtain 99kg of pectin solution. 0.006kg of calcium dihydrogen phosphate was taken and 0.994kg of deionized water was added, and the mixture was stirred at ambient temperature to obtain 1kg of calcium dihydrogen phosphate dispersion. The calcium dihydrogen phosphate dispersion was slowly poured into the pectin solution and stirred slowly at ambient temperature for 1 hour. Then let stand and keep stable for gelling for 12-20 hours at room temperature to obtain 100kg of weak-strength gel.

### Example 5

2.8kg of lemon pectin with degree of methoxylation of 71% and 0.25kg of sodium citrate were chosen. 95.95kg of deionized water was added and the mixture was heated to 35 degree Celsius. The mixture was stirred until it was dissolved to obtain 99kg of pectin solution. 0.075kg of calcium chloride was chosen and 0.925kg of deionized water was added. The mixture was stirred at ambient temperature to obtain 1kg of calcium chloride solution. The calcium chloride solution was slowly poured into the pectin solution and stirred slowly at ambient temperature for 1 hour. Then let stand and keep stable for gelling for 8 hours at room temperature to obtain 100kg of strong-strength gel.

### Example 6

1.8kg of lemon pectin with degree of methoxylation of 69% and 0.15kg of sodium citrate were selected. 97.05kg of deionized water was added and the mixture was heated to 25 degree Celsius. The mixture was stirred until it was dissolved to obtain 99kg of pectin solution. 0.116kg of tricalcium phosphate was selected and 0.884kg of deionized water was added. The mixture was stirred at ambient temperature to obtain 1kg of tricalcium phosphate dispersion. The tricalcium phosphate dispersion was slowly poured into the pectin solution and stirred slowly at ambient temperature for 1 hour. Then let stand and keep stable for gelling for 24 hours at room temperature to obtain 100kg of medium-strength gel.

### Example 7

2.5kg of sugar beet pectin with degree of methoxylation of 55% and 0.4kg of pentasodium diethylenetriaminepentaacetate (DTPA) were selected. 96.1kg of deionized water was added and the mixture was heated to 85 degree Celsius. The mixture was stirred until it was dissolved to obtain 99kg of pectin solution. 0.026kg of tricalcium phosphate was selected and 0.974kg of deionized water was added. The mixture was stirred at ambient temperature to obtain 1kg of tricalcium phosphate dispersion. Then the tricalcium phosphate dispersion was slowly poured into the pectin solution and stirred slowly at ambient temperature for 1 hour. Then let stand and keep stable for gelling for 20 hours at room temperature to obtain 100kg of medium-strength gel.

### Comparative example 1

2kg of lemon pectin with degree of methoxylation of 74%, and 0.1kg of sodium gluconate were selected. 97.9kg of deionized water was added and the mixture was heated to 35 degree Celsius. The mixture was stirred until it was dissolved to obtain 100kg of pectin solution. A slow stirring was continued at ambient temperature for 1 hour. Then let stand and keep stable for gelling for 18 hours at room temperature to obtain 100kg of pectin solution. No effective gel was formed.

### Comparative example 2

0.4kg of lemon pectin with degree of methoxylation of 63% and 0.01kg of disodium EDTA were chosen. 98.59kg of deionized water was added and the mixture was heated to 75 degree Celsius. The mixture was stirred until it was dissolved to obtain 99kg of pectin solution. 0.018kg of dicalcium phosphate was chosen and 0.982kg of deionized water was added, and the mixture was stirred at ambient temperature to obtain 1kg of dicalcium phosphate dispersion. The dicalcium phosphate dispersion was slowly poured into the pectin solution and stirred slowly at ambient temperature for 1 hour. Then let stand and keep stable for gelling for 48 hours at room temperature. No effective gel was formed.

**Table 1: Table of comparison of product performance**

| No. | Fracture strength (g/cm²) | pH | Content of soluble fiber | Concentration of calcium ion | Concentration of high methoxyl pectin | Concentration of carboxylic complexing agent |
|---|---|---|---|---|---|---|
| Example 1 | 22 | 4.2 | 4.00% | 300ppm | 5% | 1500ppm |
| Example 2 | 38 | 4.5 | 0.40% | 200ppm | 0.5% | 2000ppm |
| Example 3 | 32 | 2.8 | 0.80% | 2000ppm | 1% | 100ppm |
| Example 4 | 56 | 5.8 | 2.40% | 10ppm | 3% | 10000ppm |
| Example 5 | 268 | 4.0 | 2.24% | 270ppm | 2.8% | 2500ppm |
| Example 6 | 185 | 3.8 | 1.44% | 450ppm | 1.8% | 1500ppm |
| Example 7 | 98 | 5.2 | 2.00% | 100ppm | 2.5% | 4000ppm |
| Comparative example 1 | 0 | 3.9 | 1.60% | 0ppm | 2% | 1000ppm |
| Comparative example 2 | 0 | 4.5 | 0.32% | 30ppm | 0.4% | 100ppm |

The preparation method provided by the present disclosure does not use sugar materials (such as sucrose) or alcohol materials (such as ethanol) as the reacting materials. The method is simple and efficient. By using this method, a high-methoxyl pectin gel was prepared successfully with only a calcium ion source and a carboxylic complexing agent used. In addition, the preparation method does not have a high demand for reaction conditions. For example, some embodiments can be done at room temperature or ambient temperature. The high-methoxyl pectin gel, in particular sugar-free (or sucrose-free), calcium-rich high-methoxyl pectin gel and the preparation method thereof provided by the present disclosure make it possible to apply the high-methoxyl pectin to a sugar-free (or sucrose-free), low-calorie pectin jelly, jam, candy and confectionery.

The above examples illustrate only preferred embodiments of the present disclosure and are not used to limit the present disclosure. For those skilled in the art, the present disclosure may have various modifications and alterations. Any modification, equivalent substitution, improvement or the like made within the spirit and principle of the present disclosure should be included in the scope of the present disclosure.

## Claims

**1.** A gelling composition comprising a high-methoxyl pectin, a calcium ion and a carboxylate moiety of a carboxylic complexing agent.

**2.** The gelling composition according to claim 1, wherein the gelling composition is sucrose-free.

**3.** The gelling composition according to any one of claims 1-4, wherein the gelling composition is alcohol-free.

**4.** The gelling composition according to any one of claims 1-7, wherein the high-methoxy pectin has a degree of methoxylation of about 50-80%.

**5.** The gelling composition according to any one of claims 1-8, wherein the calcium ion in the gelling composition has a concentration of about 10-2,000ppm.

**6.** The gelling composition according to any one of claims 1-9, wherein the high-methoxyl pectin in the gelling composition has a concentration of about 0.5-5wt%, preferably about 1-3wt%.

**7.** The gelling composition according to any one of claims 1-10, wherein the carboxylate moiety of the carboxylic complexing agent is present in an amount of about 0.01-1wt%, for example, about 0.02-0.5wt% of weight of the gelling composition.

**13.** The gelling composition according to any one of claims 1-12, wherein the carboxylate moiety of the carboxylic complexing agent is selected from the group consisting of: citrate, tartrate, gluconate, ethylenediaminetetraacetate and diethylenetriaminepentaacetate, or a combination thereof.

**14.** The gelling composition according to any one of claims 1-13, wherein the carboxylic complexing agent is selected from the group consisting of citrate acid, citrate salt, tartrate acid, tartrate salt, gluconate acid, gluconate salt, ethylenediaminetetraacetate acid, ethylenediaminetetraacetate salt, diethylenetriaminepentaacetate acid and diethylenetriaminepentaacetate salt, or a combination thereof.

**15.** The gelling composition according to any one of claims 1-14, wherein the carboxylic complexing agent is selected from the group consisting of: citrate acid, tartrate acid, gluconate acid, ethylenediaminetetraacetate acid, diethylenetriaminepentaacetate acid, sodium citrate, potassium citrate, sodium tartrate, potassium tartrate, sodium gluconate, potassium gluconate, disodium ethylenediaminetetraacetate, dipotassium ethylenediaminetetraacetate, pentasodium diethylenetriaminepentaacetate and pentapotassium diethylenetriaminepentaacetate, or a combination thereof.

**16.** A high-methoxyl pectin gel, wherein the high-methoxyl pectin gel comprises a three-dimensional network structure of a high-methoxyl pectin, and the high-methoxyl pectin gel comprises the gelling composition according to any one of claims 1-15.

**17.** A method for preparing a high-methoxyl pectin gel, comprising:
- (i) providing a high-methoxyl pectin, a calcium ion source and a carboxylic complex agent; and
- (ii) reacting the high-methoxyl pectin with the calcium ion source and the carboxylic complexing agent to obtain the high-methoxyl pectin gel.

**18.** The method according to claim 17, wherein the step (ii) of reacting the high-methoxyl pectin with the calcium ion source and the carboxylic complexing agent comprises:
- (a) mixing the high-methoxyl pectin with the carboxylic complexing agent and a deionized water to obtain a pectin solution;
- (b) preparing a solution of the calcium ion source or a dispersion of the calcium ion source; and
- (c) mixing the pectin solution with the solution of the calcium ion source or the dispersion of the calcium ion source to obtain a mixture.

**19.** The method according to claim 18, wherein the step (ii) of reacting the high-methoxyl pectin with the calcium ion source and the carboxylic complexing agent further comprises:
- (d) stirring the mixture and stand for a gelling time, to obtain the high-methoxyl pectin gel.

**20.** The method according to claim 18 or 19, wherein the step (ii)(a) of mixing the high-methoxyl pectin with the carboxylic complexing agent and the deionized water is carried out at 10-90°C.

**21.** The method of any one of claims 17-20, wherein the calcium ion source is a calcium salt.

**22.** The method according to claim 21, wherein the calcium salt is selected from the group consisting of calcium chloride, calcium lactate, tricalcium phosphate, dicalcium phosphate and calcium dihydrogen phosphate, or a combination thereof.

**23.** The method according to any one of claims 18-22, wherein the step (ii)(b) of preparing a solution of a calcium ion source or a dispersion of a calcium ion source is carried out at 10-90°C.

**24.** The method according to any one of claims 18-23, wherein the step (ii)(c) of mixing the pectin solution with the solution of the calcium ion source or the dispersion of the calcium ion source is carried out at 10-90°C, preferably at 10-65°C.

**25.** The method according to any one of claims 19-24, wherein duration for the gelling time is about 1-48 hours, preferably about 4-24 hours.

**26.** The method according to any one of claims 17-25, wherein the carboxylic complexing agent is selected from the group consisting of citrate acid, citrate salt, tartrate acid, tartrate salt, gluconate acid, gluconate salt, ethylenediaminetetraacetate acid, ethylenediaminetetraacetate salt, diethylenetriaminepentaacetate acid and diethylenetriaminepentaacetate salt, or a combination thereof.

**27.** The method according to any one of claims 17-25, wherein the carboxylic complexing agent is selected from the group consisting of citrate acid, tartrate acid, gluconate acid, ethylenediaminetetraacetate acid, diethylenetriaminepentaacetate acid, sodium citrate, potassium citrate, sodium tartrate, potassium tartrate, sodium gluconate, potassium gluconate, disodium ethylenediaminetetraacetate, dipotassium ethylenediaminetetraacetate, pentasodium diethylenetriaminepentaacetate and pentapotassium diethylenetriaminepentaacetate, or a combination thereof.

**28.** The method according to any one of claims 17-27, wherein the high-methoxyl pectin has a weight of about 0.5-5wt%, preferably about 1-3wt% of total weight of a reaction system in which the high-methoxyl pectin reacts with the calcium ion source and the carboxylic complexing agent.

**29.** The method according to any one of claims 17-28, wherein in the reaction system in which the high-methoxyl pectin reacts with the calcium ion source and the carboxylic complexing agent, the carboxylic complexing agent has a concentration of about 100-10,000ppm, for example about 200-5000ppm.

**30.** The method according to any one of claims 17-29, wherein materials used in the method does not comprise sodium chloride.

**31.** A high-methoxyl (HM) pectin gel prepared according to the method of any one of claims 17-30.

**32.** A food composition comprising the gelling composition according to any one of claims 1-15, the high-methoxyl pectin gel according to claim 16 or the high-methoxyl pectin gel according to claim 31.

**33.** A feed composition comprising the gelling composition according to any one of claims 1-15, the high-methoxyl pectin gel according to claim 16 or the high-methoxyl pectin gel according to claim 31.
